# EUROPÄISCHE PATENTSCHRIFT

(11) **EP 3 933 243 B1**
(45) Veröffentlichungstag und Bekanntmachung des Hinweises auf die Patenterteilung: **12.03.2025**
(21) Anmeldenummer: 21000141.8
(22) Anmeldetag: 21.05.2021
(51) Int. Cl.: F16L 37/00, F16L 41/08

(54) **HYDRAULIKKUPPLUNG UND DRUCKSTROMVERBRAUCHEREINHEIT**
HYDRAULIC COUPLING AND PRESSURE POWER CONSUMER UNIT
RACCORD HYDRAULIQUE ET UNITÉ DE CONSOMMATION DE FLUX D'IMPRESSION

(30) Priorität: 29.06.2020 DE 102020003884; 29.06.2020 DE 202020002790 U
(43) Veröffentlichungstag der Anmeldung: 05.01.2022
(73) Patentinhaber: IPR GmbH, 96465 Neustadt b. Coburg (DE)
(72) Erfinder: Winterfeld, Erika, 96465 Neustadt b. Coburg (DE)
(74) Vertreter: Weihrauch, Frank

(56) Entgegenhaltungen:
- EP-A1- 1 483 195
- EP-A1- 3 599 594
- WO-A1-2020/121870
- DE-A1- 102015 108 892
- DE-T2- 60 209 717
- US-A1- 2018 266 602

## Beschreibung

Die Erfindung betrifft eine Hydraulikkupplung mit Sensorik, Auswerteeinheit und Datenübertragungsverbindung und eine mit einer solchen Hydraulikkupplung ausgebildete Druckstromverbrauchereinheit, insbesondere ein Kabelkonfektionierungswerkzeug.

Aus dem Stand der Technik sind lösbare Hydraulikkupplungen beispielsweise als verschiedene Stecksysteme bekannt. Die Größe und die Art der Verbindung sind von den Anwendungsbedingungen abhängig. Entscheidend dafür sind insbesondere der Arbeitsdruckbereich und der benötigte Volumenstrom. Viele Hydraulickupplungen sind für eine Anwendung in den Standard-Druckbereichen ausgelegt. Somit können Druckstromverbraucher, wie beispielsweise verschiedene Arbeitsgeräte, mit passenden Druckstromerzeugern, wie Hydraulikpumpenaggregaten kombiniert werden. Hierfür werden in den Druckstromübertragungsleitungen zwischen Druckstromverbraucher und Druckstromerzeuger lösbare Hydraulickupplungen eingesetzt. Die Funktion ist es, den Druckmittelstrom im zusammengesteckten Betriebszustand durchzuleiten und im abgekoppelten Betriebszustand zu sperren. Der Verlust des Druckmittels wird so verhindert.

Die Hydraulikkupplungen sind nach dem Stand der Technik in der Regel genormt, was einerseits mit den typischen Vorteilen einer Normung einhergeht. Andererseits besteht insofern zugleich auch der entscheidende Nachteil, dass solche Druckstromverbraucher und Druckstromerzeuger gekoppelt oder in solchen Betriebszuständen betrieben werden können, deren Parameter wie insbesondere Druck und Volumenstrom nicht kompatibel sind. Insbesondere besteht nachteilig insbesondere die Gefahr einer Beschädigung der gekoppelten Geräte und einer Verletzung des Bedieners als Arbeitsunfall.

Die Druckschrift EP 3 599 594 A1 beschreibt einen wegweisenden Lösungsansatz einer Kabelkonfektionierungswerkzeuganordnung, bei der zwischen dem Druckstromerzeuger und dem Werkzeugkopf als Druckstromverbraucher eine Datenübertragungsverbindung vorgesehen wird. Dadurch ist es möglich dem Druckstromerzeuger Informationen und Prozessparameter über den Druckstromverbraucher mitzuteilen, so dass der Betriebszustand des Druckstromerzeugers automatisch an den Werkzeugkopf angepasst werden kann. Der Nachteil dieser Lösung ist, dass ältere hydraulische Werkzeuge für eine solche Datenübertragungsverbindung nicht ausgebildet sind.

Weitere Hydraulikkupplungen zeigen die Dokumente EP 1 483 195, US2018/266602, WO2020/121870, DE 10 2015 108892, DE 602 09 717 T2.

Aufgabe der Erfindung ist es, eine zuverlässige, anwenderfreundliche und gegen Anwendungsfehler unanfällige sowie kostengünstige Lösung aufzuzeigen, mit der hydraulisch koppelbare Druckstromerzeuger und Druckstromverbraucher in sicheren und optimierten Betriebszuständen betrieben werden können und die sowohl für neue Geräte als auch für Bestandsgeräte anwendbar ist. Ferner ist es die Aufgabe der Erfindung, einen an einen Druckstromerzeuger hydraulisch koppelbaren Druckstromverbraucher mit diesen Eigenschaften aufzuzeigen.

Die Aufgabe wird in Bezug auf die Hydraulikkupplung durch die im Patentanspruch 1 aufgeführten Merkmale sowie in Bezug auf den Druckstromverbraucher durch die im Patentanspruch 6 aufgeführten Merkmale gelöst. Bevorzugte Weiterbildungen ergeben sich aus den jeweiligen Unteransprüchen.

Die Hydraulikkupplung weist erfindungsgemäß einen Grundkörper, eine Dateneinheit und eine Datenschnittstelle auf.

Der Grundkörper weist einen Kupplungsformabschnitt und einen Montageabschnitt auf.

Der Kupplungsformabschnitt ist ausgebildet, eine lösbare druckmittelübertragende Kupplungsverbindung mit einem korrespondierenden Kupplungspartner bereitzustellen.

Dies entspricht der an sich bekannten mechanischen Hydraulikkupplung. Das Druckmittel wird bei einer gekuppelten Verbindung durchgeleitet. Im entkuppelten Zustand wird durch einen Verschluss ein Austritt des Druckmittels verhindert, um eine Belastung der Umwelt sowie ein späteres Neubefüllen zu vermeiden.

Die erfindungsgemäße Hydraulikkupplung ist bevorzugt als Kupplungspartner einer werkzeuglosen Schnellkupplungseinheit ausgeführt. Der eine Kupplungspartner ist in Form eines Kupplungssteckers, auch bezeichnet als Kupplungsnippel, ausgebildet, während der zweite Kupplungspartner als Kupplungsbuchse, auch bezeichnet als Kupplungsmuffe, ausgeführt ist. Durch die ineinanderpassenden Formen und weiteren Sicherungselemente ist eine druckfeste und dichte Verbindung geschaffen. Besonders bevorzugt lässt sich die erfindungsgemäße Hydraulikkupplung zudem unter Druck kuppeln und entkuppeln.

Die erfindungsgemäße Hydraulikkupplung kann somit sowohl als ein Kupplungsstecker als auch als eine Kupplungsmuffe vorliegen.

Weiterhin weist der Grundkörper einen Montageabschnitt auf, der dazu ausgebildet ist, eine feste druckmittelübertragende Geräteverbindung mit einem Druckstromverbraucher bereitzustellen. Der Montageabschnitt ist vorzugsweise als Einschraubnippel mit einem Regelgewinde und einem Dichtsitz ausgebildet. So wird eine feste und formschlüssige Verbindung mit dem Druckstromverbraucher, beispielsweise einem Hydraulikwerkzeug, erzeugt. Die Verbindung der erfindungsgemäßen Hydraulikkupplung mittels des Montageabschnitts mit einem Druckstromverbraucher ist dauerhaft und vorzugsweise nicht lösbar, beispielsweise durch ein Klebesicherungsmittel, ausgebildet. Als Druckstromverbraucher im Sinne der vorliegenden Erfindung ist jede hydraulisch betätigte Einrichtung anzusehen. Beispielsweise kann ein Druckstromverbraucher als ein hydraulisch betätigter Werkzeugkopf eines Kabelkonfektionierungswerkzeugs, als ein Hydraulikzylinder oder als ein Hydraulikmotor vorliegen.

Die erfindungsgemäße Hydraulikkupplung ist insbesondere dadurch gekennzeichnet, dass diese eine Dateneinheit aufweist.

Die erfindungsgemäße Dateneinheit kann in unterschiedlicher Weise ausgebildet sein. Maßgeblich ist, dass in der Dateneinheit Daten vorliegen, die den Druckstromverbraucher betreffen. Diese den Druckstromverbraucher betreffenden Daten werden nachfolgend auch als Druckstromverbraucherdaten bezeichnet.

Die Druckstromverbraucherdaten können beispielsweise als Identifikationsdaten vorliegen, aus denen der Druckstromverbrauchertyp oder auch die Druckstromverbraucheridentität hervorgeht. Bei den Identifikationsdaten handelt es sich vorzugsweise um einen numerischen oder alphanumerischen Code. Die Dateneinheit kann in einer einfachen Ausbildung somit zum Beispiel lediglich als ein in einem RFID gespeicherter Identitätscode vorliegen.

Bei den Druckstromverbraucherdaten kann es sich zudem um Daten über Betriebszustände des Druckstromverbrauchers, beispielsweise eines Werkzeugkopfes eines Kabelkonfektionierungswerkzeugs, handeln. Bei Betriebszuständen kann es sich beispielsweise um einen Volumenstrom, um Positionen von Elementen des Werkzeugeinsatzes wie eine Betätigungsendlage, Betätigungskräfte oder eine kumulierte Anzahl von Betätigungen des Werkzeugkopfes handeln.

Die Dateneinheit weist einen Datenspeicher auf. Besonders bevorzugt kann es sich hierbei um eine Kombination aus einem nicht wiederbeschreibbaren Datenspeicher und aus einem beschreibbaren Datenspeicher handeln. In dem nicht wiederbeschreibbaren Datenspeicher können beispielsweise ein Identitätscode sowie zulässige Betriebsparameter wie ein zulässiger Druck oder Volumenstrom eines Druckmittels dauerhaft abgelegt sein. In den beschreibbaren Datenspeicher können beispielsweise Ereignisse des Betriebs des Druckstromverbrauchers wie insbesondere die Anzahl der Betätigungen ein- und fortgeschrieben werden. Es können dort aber auch besondere Betriebsereignisse wie beispielsweise eine Überschreitung eines bestimmten Maximaldrucks eingeschrieben werden. Auf diese Weise ist es möglich, dass in der Dateneinheit eine Betriebshistorie des Druckstromverbrauchers aufgezeichnet wird.

Die Dateneinheit kann zudem auch eine Sensorik zur Erfassung von Betriebszuständen sowie Mittel zur Auswertung der Sensorik und zur Übertragung von Sensordaten an einen Datenspeicher oder an die erste Datenschnittstelle aufweisen.

Ferner ist es möglich, dass die Dateneinheit eine Steuerungseinheit, insbesondere einen Microcontroller aufweist.

Die Dateneinheit ist baulich so in den Grundkörper integriert, dass ein Zugang ausschließlich unter Zerstörung des Kupplungsformabschnitts oder des Montageabschnitts oder eines anderen druckmittelführenden Abschnitts möglich ist. Auf diese Weise ist eine besonders hohe Manipulationssicherheit gewährleistet. Zudem weist die erfindungsgemäße Hydraulikkupplung auch eine Datenschnittstelle auf, die mit der Dateneinheit verbunden und ausgebildet ist, eine Datenübertragungsverbindung herzustellen. Die Datenübertragungsverbindung ist vorzugsweise physisch robust ausgelegt, um in rauen Anwendungsumgebungen fehlerfrei zu funktionieren. Die Datenübertragungsverbindung ist vorzugsweise drahtgebunden ausgebildet und in einen an die Hydraulikkupplung anzukuppelnden Hydraulikschlauch integriert. Ferner kann die Datenschnittstelle auch als eine Schnittstelle zu einer als Funkverbindung ausgebildeten Datenübertragungsverbindung ausgebildet sein. Ferner ist es möglich, die Datenschnittstelle als eine Schnittstelle für einen akustischen Signalweg auszubilden, insbesondere als Ultraschallsender und -empfänger. In dieser Weiterbildung besteht insbesondere der Vorteil einer elektromagnetischen Unanfälligkeit der Datenübertragung, was im Bereich der Starkstromtechnik durch mögliche starke Felder in der räumlichen Umgebung eines Einsatzortes besonders wichtig sein kann.

Elektronisch kann die Datenschnittstelle auch als Bussystem konzipiert werden. Die zu übertragenden Daten werden optional verschlüsselt übertragen, um eine Manipulationssicherheit zu erreichen.

Die Datenschnittstelle und die Datenübertragungsverbindung sind für eine Kommunikation mit einem Druckstromerzeuger ausgebildet und eingerichtet. Ein solcher Druckstromerzeuger ist beispielsweise ein tragbares Hydraulikaggregat, welches für eine Kommunikation mit einem Druckstromverbraucher ausgebildet ist.

In einer vorteilhaften Variante ist die Datenschnittstelle mehrfach ausgebildet. Die ermöglicht eine Redundanz zur Erhöhung der Zuverlässigkeit. Beispielsweise kann vorgesehen werden, dass Signale parallel übertragen und dann von dem empfangenden Kommunikationspartner auf Übereinstimmung überprüft werden. Ist dies nicht der Fall, kann das Signal verworfen und so ein fehlerhafter Betrieb oder eine fehlerhafte Einschreibung von Daten verhindert werden.

Beispielsweise kann der Identifikationscode an ein solches angekuppeltes Hydraulikaggregat übertragen werden, welches aus dem Identifikationscode den Gerätetyp des Druckstromverbrauchers erkennt. In dem Hydraulikaggregat ist in einer Datenbank beispielsweise der maximale Betriebsdruck des Druckstromverbrauchers hinterlegt. Die Steuerungseinheit des Hydraulikaggregats regelt die Hydraulikpumpe dann in der Weise, dass der maximale Betriebsdruck nicht überschritten wird.

Vorzugsweise kann die Datenschnittstelle auch für eine Ersteinrichtung der Dateneinheit durch eine autorisierte Fachwerkstatt genutzt werden. Hierbei wird vorzugsweise zudem auch die physische dauerhafte Verbindung der Hydraulikkupplung über den Montageabschnitt mit dem Druckstromverbraucher hergestellt.

Bei der Ersteinrichtung werden vorzugsweise in einen nicht wiederbeschreibbaren Speicher ein Identifikationscode sowie optional grundlegende Daten zu Betriebsparametern oder verpflichtenden Wartungsintervallen eingeschrieben. Ferner kann auch hinterlegt werden, welche autorisierte Fachwerkstatt die Ersteinrichtung durchgeführt hat. Es können zusätzliche Datensicherungen vorgesehen sein, um eine Ersteinrichtung durch Unbefugte oder eine nachträgliche Veränderung der Daten der Ersteinrichtung zu verhindern.

Insbesondere ist auch eine hierarchisch strukturierte Ersteinrichtung möglich. So kann beispielsweise herstellerseitig eine primäre Ersteinrichtung durch das einschreiben eines Identifikationscodes erfolgen. Damit ist die Hydraulikkupplung eindeutig identifiziert. Nachfolgend kann dann eine sekundäre Ersteinrichtung durch eine Fachwerkstatt erfolgen, wenn diese die Herstellung der physisch dauerhaften Verbindung mit dem Druckstromverbraucher vornimmt. Bei einer solchen sekundären Ersteinrichtung können dann insbesondere für den Druckstromverbrauchertyp spezifische Betriebsparameter in die Dateneinheit eingeschrieben werden. Die Befugnis für eine solche sekundäre Ersteinrichtung kann beispielsweise durch ein mit dem Identifikationscode verknüpften elektronischen Schlüssel geschützt werden.

Es wird mit der erfindungsgemäßen Hydraulikkupplung überraschend eine einfache Lösung bereitgestellt um eine technische Kommunikation mit einem an sich nicht dafür ausgebildeten Druckstromverbraucher zu ermöglichen. Die erfindungsgemäße Hydraulikkupplung, nachfolgend auch intelligente Hydraulikkupplung genannt, repräsentiert den Druckstromverbraucher gegenüber einem technischen Kommunikationspartner, insbesondere gegenüber einem Druckstromerzeuger.

Besonders vorteilhaft kann eine erfindungsgemäße Hydraulikkupplung als an sich druckstromverbraucherneutrales Bauteil in Serie in großer Stückzahl preisgünstig hergestellt werden. Erst durch die Montage am Druckstromverbraucher und die Ersteinrichtung wird sie funktional auf den betreffenden Druckstromverbraucher angepasst. Die Ersteinrichtung durch eine autorisierte Fachwerkstatt gewährleistet somit eine mittelbare Autorisierung des Druckstromverbrauchers gegenüber einem hierfür eingerichteten Druckstromerzeuger.

Die erfindungsgemäße Hydraulikkupplung ermöglicht somit einen besonders hohen Sicherheitsstandard bei einem Betrieb von Druckstromverbrauchern. Dies ist beispielsweise dann relevant, wenn es sich bei den Druckstromverbrauchern um hydraulisch angetriebene Werkzeuge in einem sicherheitsrelevanten Bereich wie beispielsweise der Kabelkonfektionierung von Hochspannungsleitungen handelt.

Die Hydraulikkupplung weist an dem Montageabschnitt eine Sicherheitsverbindungsschnittstelle auf. Diese ist ausgebildet in einem Montagezustand eine Sicherheitsverbindung zu dem Druckstromverbraucher auszubilden und bei einer Unterbrechung der Sicherheitsverbindung einen Zustand der Dateneinheit zu verändern.

Auf diese Weise wird ein Sicherheitsmerkmal bereit gestellt, welches eine Manipulation verhindern soll. Da die intelligente Hydraulikkupplung eine Datenbasis zum montierten Druckstromverbraucher beinhaltet und insofern diesen gegenüber einem technischen Kommunikationspartner repräsentiert, soll ein unkontrollierter Wechsel der Hydraulikkupplung zu einem anderen Druckstromverbraucher unterbunden werden. Die Sicherheitsverbindung kann beispielsweise als ein verklebter Chip ausgebildet sein, der bei einem Lösen der Sicherheitsverbindung zerstört wird.

Sobald die intelligente Hydraulikkupplung unerlaubt vom Werkzeug getrennt wird, schreibt die Sicherheitsverbindung einen permanenten Wert in die Dateneinheit ein. So wird die Manipulation dauerhaft gespeichert. Vorzugsweise ist dieser Wert so eingerichtet, dass die Dateneinheit als ungültig gesetzt wird. Ein angekuppeltes Hydraulikaggregat erkennt somit keinen gültigen Druckstromverbraucher und kann nicht aktiviert werden.

Die Hydraulikkupplung ist somit für eine weitere Benutzung gesperrt und ist nur durch eine Fachwerkstatt zurücksetzbar.

In einer anderen vorteilhaften Weiterbildung weist die Dateneinheit eine Sensoreinheit auf. Die Sensoreinheit ist ausgebildet, Informationen über mindestens einen Prozessparameter, vorzugsweise über verschiedene Prozessparameter, zu erfassen.

Dadurch ist es möglich ohne einen physischen Eingriff in die Struktur des montierten Druckstromverbrauchers Prozessparameter zu erfassen. So ist es beispielswese möglich, für ein technisch weniger aktuelles mechanisches Hydraulikwerkzeug eine gewisse Intelligenz nachzurüsten. Beispielsweise die Prozessparameter Volumenstrom und Druck für das Hydraulikwerkzeug können so durch die Hydraulikkupplung gemessen werden. Weitere durch die Sensoreinheit erfassbare Prozessparameter können beispielsweise die elektrische Ölleitfähigkeit, die Öltemperatur und die Umgebungstemperatur sowie auch Datum und Uhrzeit sein.

In einer anderen vorteilhaften Weiterbildung weist die Dateneinheit eine Steuerungs- und Auswertungseinheit auf. Diese ermöglicht vorzugsweise eine Auswertung und Speicherung der durch die Sensoreinheit gesammelten Daten. Die so beschreib- und erweiterbare Datenbasis kann auffällige Betriebszustände, Benutzungszyklen und angeschlossene Hydraulikaggregate speichern. Diese Informationen können dann durch eine Fachwerkstatt ausgelesen und zu Wartungszwecken benutzt werden. Ebenso können in der Dateneinheit Herstellerwerte, wie Maximaldruck, Öldurchflussmenge und weitere Daten wie Bedienungsanleitungen und Ähnliches festgeschrieben werden. Aber auch Umgebungsbedingungen, die Einfluss auf die Prozessparameter des Werkzeugs und des Hydraulikaggregates aufweisen, können so analysiert und verarbeitet werden. Während der Nutzung des Werkzeugs ist es zudem möglich, weitere Parameter, wie Geodaten, Bewegungsdaten, Klimadaten, Nutzungsdaten, Betriebsstunden und Ähnliches zu sammeln und abzuspeichern. Vorzugsweise können hieraus eine Verschleißvorhersage und eine Wartungsempfehlung errechnet werden. Eine intelligente Wartungsakte ist ein weiterer möglicher Vorteil.

In einer anderen vorteilhaften Weiterbildung ist die Datenschnittstelle als physische Datenschnittstelle zur Übertragung mit einer korrespondierenden Datenschnittstelle des korrespondierenden Kupplungspartners ausgebildet. Vorzugsweise kommt eine genormte Datenschnittstelle oder ein Bussystem zum Einsatz. Dadurch ist es möglich eine Vielzahl von Hydraulikaggregaten mit dem Werkzeug zu kombinieren. Beispielsweise kann die physische Datenschnittstelle für eine drahtgebundene Übertragung, für eine akustische Übertragung oder als eine optische Kopplung mit einem Lichtleiter ausgebildet sein.

In einer anderen vorteilhaften Weiterbildung ist die Datenschnittstelle für eine bidirektionale Datenübertragung ausgebildet. So kann einerseits die Basiskonfiguration des Werkzeugs an das Hydraulikaggregat weitergegeben werden. Es können Prozessparameter an das Hydraulikaggregat übermittelt werden, um den idealen Arbeitsbereich des Werkzeugs sicherzustellen. Es können andererseits auch Parameter des Hydraulikaggregats an die Hydraulikkupplung übermittelt werden. Dadurch ist es möglich nachzuvollziehen, an welchem Aggregat das Werkzeug angeschlossen und betrieben wurde. Auch Prozessparameter und Fehlerzustände des Hydraulikaggregats können in der Hydraulikkupplung gespeichert werden. So ist die Benutzungshistorie des Werkzeugs für eine Fachwerkstatt jederzeit nachvollziehbar.

Eine erfindungsgemäße Druckstromverbrauchereinheit weist einen Druckstromverbraucher und eine Hydraulikkupplung nach einem der vorhergehenden Ansprüche auf.

Bei dem Druckstromverbraucher kann es sich um jede Einrichtung handeln, die einen hydraulischen Druckstrom aufnimmt. Insbesondere kann es sich um hydraulisch betätigte Werkzeuge, Hydraulikzylinder oder Hydraulikmotoren handeln.

Die Hydraulikkupplung zu dem Druckstromverbraucher steht erfindungsgemäß in dem Montagezustand. Der Druckstromverbraucher, ein Werkzeug oder hydraulisches Anbauteil ist fest mit der Hydraulikkupplung verbunden. Die Verbindung ist als feste Schraubverbindung druckdicht ausgelegt.
in einer vorteilhaften Weiterbildung der Druckstromverbrauchereinheit weist die Druckstromverbrauchereinheit die Sicherheitsverbindung auf, wobei die Hydraulickupplung zu dem Druckstromverbraucher in dem Montagezustand steht und zu diesem die Sicherheitsverbindung besteht.

Dadurch ist gewährleistet, dass die Informationen, die in der Hydraulikkupplung gespeichert und dem Druckstromverbraucher zugeordnet sind, erstens immer bei dem Betrieb dieses Druckstromverbrauchers und zweitens nicht bei dem Betrieb eines anderen Druckstromverbrauchers angewandt werden.

Da sich die beiden Montagepartner in dem Montagezustand befinden, löst ein Demontieren beider die Sicherheitsverbindung aus. So wird die Hydraulikkupplung unbenutzbar gemacht und kann an keinem anderen Werkzeug verbaut werden. Eine Sabotage oder Manipulation wird so ausgeschlossen.

In einer anderen vorteilhaften Weiterbildung ist der Druckstromverbraucher als Kabelkonfektionierungswerkzeugkopf ausgebildet.

Diese Weiterbildung ist von besonderem Vorteil, weil in dem Bereich der Kabelkonfektionierung in der Starkstromtechnik hohe Sicherheitsstandards gelten. Hier ist eine Überwachung der Betriebsparameter besonders wichtig um zu gewährleisten, dass beispielsweise Schnitte vollständig ausgeführt oder Klemmen mit der vorgeschriebenen Kraft aufgepresst werden. Ferner bestehen hier hohe Anforderungen an eine manipulationssichere Dokumentation der Ausführung der Bearbeitungsvorgänge sowie der Überwachung der Verwendung betriebssicherer Arbeitsmittel. Diesen Anforderungen kann mit einer erfindungsgemäßen Druckstromverbrauchereinheit mit einem Kabelkonfektionierungswerkzeugkopf als Druckstromverbraucher entsprochen werden.

Die Erfindung wird als Ausführungsbeispiel anhand von
- Fig. 1: schematische Darstellung eines Funktionsaufbaus der Hydraulikkupplung mit Anbauteilen und Kopplungspartner
- Fig. 2: schematische Schrägbild-Darstellung der Hydraulikkupplung mit Ausschnitt der Dateneinheit
näher erläutert.

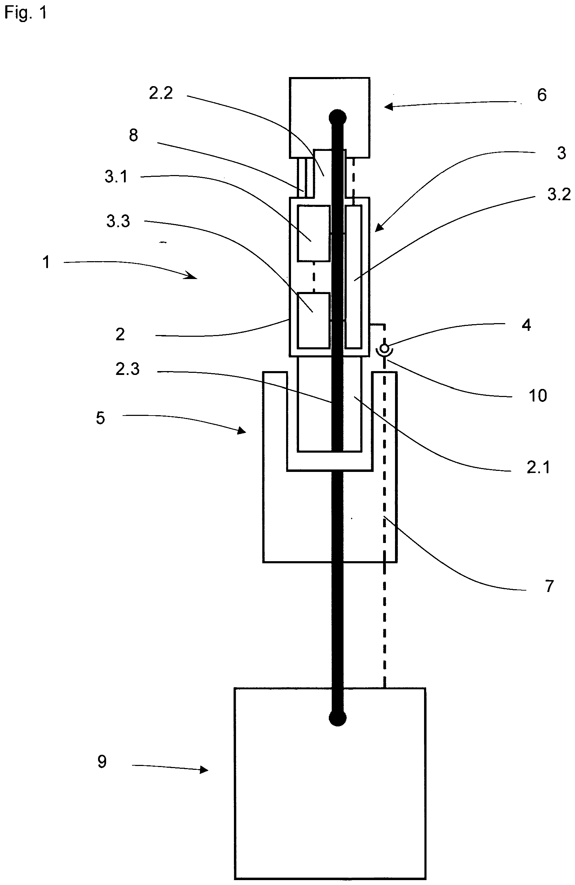

Die Figur 1 zeigt den schematischen Aufbau der Hydraulikkupplung 1 im Funktionszusammenhang mit einem Druckstromverbraucher 6.

Der Grundkörper 2 weist den Kupplungsformabschnitt 2 auf. Die Hydraulikkupplung 1 ist in dem vorliegenden Ausführungsbeispiel als Kupplungsstecker ausgebildet. In dem Grundkörper 2 ist die Dateneinheit 3 integriert. Die Verbindung des Druckstromverbrauchers 6 und der Hydraulikkupplung 1 erfolgt über den Montageabschnitt 2.2 des Grundkörpers 2. Gesichert wird diese Verbindung über die Sicherheitsverbindung 8. Die Sicherheitsverbindung ist in dem Ausführungsbeispiel als Klebesiegel ausgebildet, wobei bei deren Lösen Leiterbahnen zerstört werden.

Über den Kupplungsformabschnitt 2.1 wird die Hydraulikkupplung 1 mit dem Kupplungspartner 5 druckfest und für das Druckmittel dichtschließend, aber zugleich werkzeuglos lösbar gekuppelt. Die Hydraulikkupplung 1 liegt als Kupplungsstecker und der Kupplungspartner 5 als Kupplungsbuchse vor.

Die Hydraulikkupplung 1 beinhaltet zudem die Dateneinheit 3. Diese besteht aus einem Datenspeicher 3.1, einer Sensoreinheit 3.2 und einer Steuerungs- und Auswertungseinheit 3.3. Zwischen den einzelnen elektronischen Komponenten besteht eine interne Datenverbindung. Zur Kommunikation mit einem als tragbares Hydraulikaggregat vorliegenden Druckstromerzeuger 9 besteht an der Hydraulikkupplung 1 eine Datenschnittstelle 4 und an dem Kupplungspartner 5 eine korrespondierende Datenschnittstelle 10. So können Daten von der Hydraulikkupplung 1 bis zum Druckstromerzeuger 9 weitergeleitet werden. Zur Übertragung des Druckmittels vom Druckstromerzeuger 9 zum Druckstromverbraucher 6 existiert zudem innerhalb des Grundkörpers 2 der Druckstromkanal 2.3.

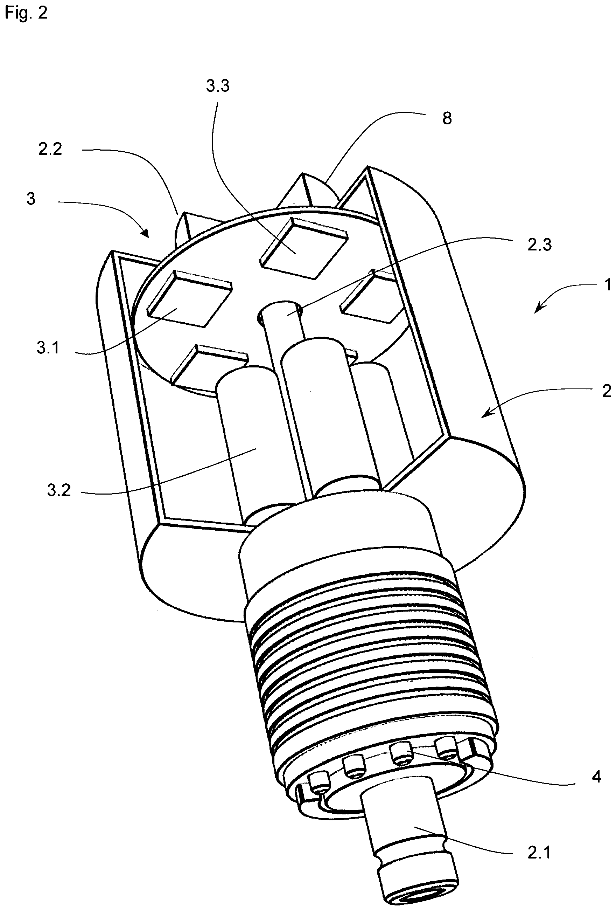

Die Figur 2 zeigt in einer schematischen Schrägbild-Darstellung die Hydraulickupplung 1. Diese weist an ihrem Grundkörper 2 den Kupplungsformabschnitt 2.1 mit daran anschließender Datenschnittstelle 4 auf. Durch die Hydraulikkupplung 1 führt auf ganzer Länge der Druckstromkanal 2.3. Dieser fördert das Druckmedium vom Kupplungsformabschnitt 2.1 zum Montageabschnitt 2.2. Die Dateneinheit 3 umfasst einen Datenspeicher 3.1 und eine Sensoreinheit 3.2 zur Erfassung von verschiedenen Messwerten, wie beispielsweise des Drucks und des Volumenstroms des Druckmitteldurchflusses. Zudem befindet sich auch hier die Steuerungs- und Auswertungseinheit 3.3, die die Messwerte und Steuerungsparameter verarbeitet und Daten zur Datenschnittstelle 4 weiterleitet. An die Dateneinheit 3 räumlich angeschlossen ist der Montageabschnitt 2.2 mittels dessen die Hydraulickupplung 1 an ein hydraulisch betätigtes Werkzeug, dem Druckstromverbraucher, montiert wird. Parallel dazu befindet sich die Sicherheitsverbindung 8, die bei einer Trennung der Hydraulikkupplung 1 vom Werkzeug die Dateneinheit 3 elektronisch für den weiteren Gebrauch sperrt.

### Verwendete Bezugszeichen

- 1: Hydraulikkupplung
- 2: Grundkörper
- 2.1: Kupplungsformabschnitt
- 2.2: Montageabschnitt
- 2.3: Druckstromkanal
- 3: Dateneinheit
- 3.1: Datenspeicher
- 3.2: Sensoreinheit
- 3.3: Steuerungs- und Auswertungseinheit
- 4: Datenschnittstelle
- 5: korrespondierender Kupplungspartner
- 6: Druckstromverbraucher
- 7: Datenübertragungsverbindung
- 8: Sicherheitsverbindung
- 9: Druckstromerzeuger

## Patentansprüche

1. Hydraulikkupplung (1),
aufweisend einen Grundkörper (2), eine Dateneinheit (3) und eine Datenschnittstelle (4),
wobei der Grundkörper (2) aufweist
einen Kupplungsformabschnitt (2.1), der ausgebildet ist, eine lösbare druckmittelübertragende Kupplungsverbindung mit einem korrespondierenden Kupplungspartner (5) bereitzustellen,
einen Montageabschnitt (2.2), der ausgebildet ist, eine feste, druckmittelübertragende Geräteverbindung mit einem Druckstromverbraucher (6) bereitzustellen,
und einen Druckstromkanal (2.3), der ausgebildet ist, druckführend den Kupplungsformabschnitt (2.1) und den Montageabschnitt (2.2) zu verbinden, wobei die Dateneinheit (3) in den Grundkörper integriert ist und einen Datenspeicher (3.1) aufweist,
und wobei die Datenschnittstelle (4) mit der Dateneinheit (3) verbunden und dazu ausgebildet ist, eine Datenübertragungsverbindung (7) herzustellen, **dadurch gekennzeichnet,**
**dass** die Hydraulikkupplung (1) an dem Montageabschnitt (2.2) eine Sicherheitsverbindungsstelle aufweist, die ausgebildet ist in einem Montagezustand eine Sicherheitsverbindung (8) zu dem Druckstromverbraucher (6) auszubilden und bei einer Unterbrechung der Sicherheitsverbindung (8) einen Zustand der Dateneinheit (3) zu verändern, indem sie einen permanenten Wert in die Dateneinheit (3) einschreibt.

2. Hydraulikkupplung (1) nach Anspruch 1,
**dadurch gekennzeichnet,**
**dass** die Dateneinheit (3) eine Sensoreinheit (3.2) aufweist.

3. Hydraulikkupplung (1) nach einem der vorhergehenden Ansprüche,
**dadurch gekennzeichnet,**
**dass** die Dateneinheit (3) eine Steuerungs- und Auswerteeinheit (3.3) aufweist.

4. Hydraulikkupplung (1) nach einem der vorhergehenden Ansprüche,
**dadurch gekennzeichnet,**
**dass** die Datenschnittstelle (4) als physische Datenschnittstelle zur Datenübertragung mit einer korrespondierenden Datenschnittstelle (10) des korrespondierenden Kupplungspartners (5) ausgebildet ist.

5. Hydraulikkupplung (1) nach einem der vorhergehenden Ansprüche,
**dadurch gekennzeichnet,**
**dass** die Datenschnittstelle (4) für eine bidirektionale Datenübertragung ausgebildet ist.

6. Druckstromverbrauchereinheit,
**dadurch gekennzeichnet,**
**dass** diese einen Druckstromverbraucher (6) und eine Hydraulikkupplung (1) nach einem der vorhergehenden Ansprüche aufweist,
wobei die Hydraulikkupplung (1) zu dem Druckstromverbraucher (6) in dem Montagezustand steht.

7. Druckstromverbrauchereinheit nach Anspruch 6,
**dadurch gekennzeichnet,**
**dass** die Hydraulikkupplung (1) zu dem Druckstromverbraucher (6) in dem Montagezustand steht und zu diesem die Sicherheitsverbindung (8) aufweist.

8. Druckstromverbrauchereinheit nach einem der Ansprüche 6 oder 7, **dadurch gekennzeichnet,**
**dass** der Druckstromverbraucher (6) als Kabelkonfektionierungswerkzeugkopf ausgebildet ist.

## Claims

1. A hydraulic coupling (1),
comprising a base body (2), a data unit (3) and a data interface (4), wherein the base body (2) comprises
a coupling form section (2.1) which is designed to provide a releasable pressure-medium-transmitting coupling connection to a corresponding coupling partner (5),
an assembly section (2.2) which is designed to provide a fixed, pressure-medium-transmitting device connection to a pressure-flow consumer (6), and a pressure flow channel (2.3) which is designed to connect the coupling form section (2.1) and the assembly section (2.2) in a pressure-transmitting manner,
wherein the data unit (3) is integrated into the base body and comprises a data memory (3.1),
and wherein the data interface (4) is connected to the data unit (3) and is designed to establish a data transfer connection (7),
**characterized in**
**that**, at the assembly section (2.2), the hydraulic coupling (1) comprises a safety connection interface which is designed to establish a safety connection (8) to the pressure-flow consumer (6) in an assembled state and, when the safety connection (8) is interrupted, to change a state of the data unit (3) by writing a permanent value into the data unit (3).

2. The hydraulic coupling (1) according to claim 1,
**characterized in**
**that** the data unit (3) comprises a sensor unit (3.2).

3. The hydraulic coupling (1) according to one of the previous claims,
**characterized in**
**that** the data unit (3) comprises a control and evaluation unit (3.3).

4. The hydraulic coupling (1) according to one of the previous claims,
**characterized in**
**that** the data interface (4) is designed as a physical data interface for data communication with a corresponding data interface (10) of the corresponding coupling partner (5).

5. The hydraulic coupling (1) according to one of the previous claims,
**characterized in**
**that** the data interface (4) is designed for a bidirectional data communication.

6. A pressure-flow consumer unit,
**characterized in**
**that** it comprises a pressure-flow consumer (6) and a hydraulic coupling (1) according to one of the previous claims,
wherein the hydraulic coupling (1) is in the assembled state to the pressure-flow consumer (6).

7. The pressure-flow consumer unit according to claim 6,
**characterized in**
**that** the hydraulic coupling (1) is in the assembled state to the pressure-flow consumer (6) and provides the safety connection (8) to it.

8. The pressure-flow consumer unit according to one of the claims 6 or 7,
**characterized in**
**that** the pressure-flow consumer (6) is designed as a cable assembly tool head.

## Revendications

1. Accouplement hydraulique (1),
présentant un corps de base (2), une unité de données (3) et l'interface de données (4),
où le corps de base (2) présente
une section de forme d'accouplement (2.1), qui est conçue pour fournir une liaison d'accouplement amovible transmettant un fluide sous pression avec un partenaire d'accouplement correspondant (5),
une section de montage (2.2) qui est conçue pour fournir une connexion d'appareil fixe, transmettant un fluide sous pression, avec un consommateur de courant sous pression (6),
et un canal d'écoulement du courant sous pression (2.3) qui est conçu pour relier la section de forme d'accouplement (2.1) et la section de montage (2.2) en conduisant la pression,
où l'unité de données (3) est intégrée dans le corps de base et présente une mémoire de données (3.1),
et où lequel l'interface de données (4) est connectée à l'unité de données (3) et est adaptée pour établir une connexion de transmission de données (7), est **caractérisé en ce**
**que** l'accouplement hydraulique (1) présente, sur la section de montage (2.2), un point de liaison de sécurité qui est conçu pour former, dans un état de montage, une liaison de sécurité (8) vers le consommateur de courant sous pression (6) et, en cas d'interruption de la liaison de sécurité (8), pour modifier un état de l'unité de données (3) en entrant une valeur permanente dans l'unité de données (3).

2. Accouplement hydraulique (1) selon la revendication 1 est **caractérisé en ce**
**que** l'unité de données (3) présente un dispositif détecteur (3.2).

3. Accouplement hydraulique (1) suivant une des revendications précédentes est **caractérisé en ce**
**que** l'unité de données (3) présente une unité de commande et d'évaluation (3.3).

4. Accouplement hydraulique (1) suivant une des revendications précédentes est **caractérisé en ce**
**que** l'interface de données (4) est conçue comme une interface de données physique pour la transmission de données avec une interface de données (10) correspondante du partenaire d'accouplement (5) correspondant.

5. Accouplement hydraulique (1) suivant une des revendications précédentes est **caractérisé en ce**
**que** l'interface de données (4) est conçue pour une transmission de données bidirectionnelle.

6. Unité consommateur de courant sous pression,
est **caractérisée en ce**
**que** celui-ci présente un consommateur de courant sous pression (6) et un accouplement hydraulique (1) selon l'une des revendications précédentes,
dans lequel l'accouplement hydraulique (1) est dans l'état monté par rapport au consommateur de courant sous pression (6).

7. Unité consommateur de courant sous pression suivant la revendication 6 est **caractérisée en ce**
**que** l'accouplement hydraulique (1) est à l'état monté par rapport au consommateur de courant sous pression (6) et présente la liaison de sécurité (8) par rapport à celui-ci.

8. Unité consommateur de courant sous pression (5) suivant une des revendications 6 ou 7
est **caractérisée en ce**
**que** le consommateur de courant sous pression (6) est conçu comme tête d'outil de confection de câbles.
